# EUROPEAN PATENT APPLICATION

(11) **EP 4 117 085 A1**
(43) Date of publication of application: **11.01.2023**
(21) Application number: 21184145.7
(22) Date of filing: 07.07.2021
(51) Int. Cl.: H01M 10/613, C09K 5/10, C09K 5/20, C23F 11/18

(54) **NOVEL COOLANT WITH LOW ELECTRICAL CONDUCTIVITY**

(71) Applicant: BASF SE, 67056 Ludwigshafen am Rhein (DE)
(72) Inventor: Hirosue, Masayuki, 67056 Ludwigshafen (DE); Malkowsky, Itamar Michael, 67056 Ludwigshafen (DE); Nitzschke, Uwe, 67056 Ludwigshafen (DE); Schindler, Nina, 67056 Ludwigshafen (DE)
(74) Representative: BASF IP Association

(57) **Abstract**

The present application describes coolants with low electrical conductivity, the corresponding coolant concentrates, and the use of such coolants in cooling systems of vehicles with electric engines, fuel cells or hybrid engines with a combination of combustion engines with electric engines or a combination of combustion engines with fuel cells.

## Description

The present application describes coolants with low electrical conductivity, the corresponding coolant concentrates, and the use of such coolants in cooling systems of vehicles with electric engines, fuel cells or hybrid engines with a combination of combustion engines with electric engines or a combination of combustion engines with fuel cells.

WO 02/101848 discloses coolants comprising azole derivatives and optionally orthosilicates for cooling of fuel-cell drives. As alkylene glycol component mono ethylene glycol is especially preferred, besides mono ethylene glycol furthermore mono propylene glycol may be used. No coolants comprising other alkylene glycol components other than mono ethylene glycol are disclosed. A low conductivity is crucial for such coolants in order to prevent a short circuit of the electrodes and to improve the safety features of the cooling system. The explicitly disclosed coolants each comprise 60 vol% of mono ethylene glycol and 40 vol% water.

There is still a need for coolants with a low electrical conductivity which retain such low electrical conductivity while they are in use.

Alternatives for the widespreadly used monoethylene glycol and its derivatives as freezing point suppressing agents in coolants were developed:
WO 2004/053015 A1 discloses coolants based on azol derivatives containing 1,3-propanediol for fuel cell coolants.
WO 2006/092376 A1 discloses glycerol as antifreezing agent.

It was an object of the present invention to provide coolants which exhibit an electrical conductivity low enough so that the respective coolants are suitable for use in vehicles with an electrical drive.

The object was achieved by coolants, comprising
(A) at least one 1,2-propylene glycol or derivatives thereof
(B) water
(C) at least one azole derivative
(D) optionally at least one ester of orthosilicic acid or alkoxy alkylsilane
(G) optionally at least one silicophosphonate
(H) optionally at least one further coolant additive
wherein at least one of the components (D) and (G) is present, and
wherein the electrical conductivity is at most 50 µS/cm, preferably at most 40 µS/cm, more preferably at most 30 and most preferably at most 20 µS/cm.

Unless stated otherwise the electrical conductivity given in this text is measured according to ASTM D 1125 at 25 °C.

Such coolants exhibit both, a low electrical conductivity which makes them usable as coolants for vehicles with an electrical drive and good anti-corrosion properties, especially against aluminium corrosion.

In a preferred embodiment the coolant according to the invention comprises at least one compound (G) and no compound (D).

In another preferred embodiment the coolant according to the invention comprises at least one compound (D) and at least one compound (G). It is one of the advantages of this embodiment that the coolants exhibit a high corrosion protection and the coolant remains stable during the corrosion process, therefore, this embodiment is especially preferred.

In yet another preferred embodiment the coolant according to the invention comprises at least one compound (D) and no compound (G). It is one of the advantages of this embodiment that the coolants exhibit a very low electrical conductivity. Many coolant cycles for cooling of vehicles with an electrical drive comprise at least one ion exchanger in the loop in order to remove degradation products from the coolants or traces of metal ions from corrosion so that the electrical conductivity remains low, see e.g. WO 00/17951. It is an advantage of this preferred embodiment that the coolant with no component (G) present is especially suitable for such coolant cycles, since the ion exchanger would remove charged compounds from the coolant. Since component (G) is such a charged compound, such compound would be removed by the ion exchanger while the coolant is pumped in a circle. Therefore, it is a special feature of this preferred embodiment that such coolants with no compound (G) present are used in cooling systems of vehicles with electric engines, fuel cells or hybrid engines, wherein the cooling system comprises at least one ion exchanger, either anion exchanger or cation exchanger or both.

In one alternative of this preferred embodiment the coolant comprises not more than 50 vol% of 1,2-propylene glycol or derivatives thereof and at least 50 vol% water.

In a second alternative of this preferred embodiment the coolant comprises only 1,2-propylene glycol or derivatives thereof as glycol (A) without other alkylene glycols or derivatives thereof than 1,2-propylene glycol.

Details to the constituents are as follows:

### Glycol (A)

As antifreezing agent (A) according to the present invention 1,2-propylene glycol and its derivatives is used. Derivatives of 1,2-propylene glycol may be poly- and oligomers as well as mono- or dialkyl ethers of 1,2-propylene glycol, its poly- and oligomers.

Poly- and oligomers of 1,2-propylene glycol are dipropylene glycol, tripropylene glycol, and tetrapropylene glycol, as well as higher homologues thereof up to a molecular weight of 598 g/mol.

Preferably, component (A) comprises only dipropylene glycol and tripropylene glycol beyond 1,2-propylene glycol and no higher homologues, more preferably only dipropylene glycol.

Mono- or dialkyl ethers of the above-mentioned 1,2-propylene glycol and its poly- and oligomers are preferably mono- or di-C₁- to C₄-alkyl ethers, more preferably mono-C₁- to C₄-alkyl ethers, even more preferably methyl-, ethyl- or n-butyl ethers, especially mono- methyl-, ethyl- or n-butyl ethers.

In the context of the present text the phrase "C₁- to C₄-alkyl" stands for methyl, ethyl, n-propyl, iso-propyl, n-butyl, iso-butyl, sec-butyl and tert-butyl, preferably methyl, ethyl, n-propyl, n-butyl, iso-butyl, and tert-butyl, more preferably methyl, ethyl, and n-butyl.

In a preferred embodiment component (A) the content of 1,2-propylene glycol is at least 50 % by weight among other derivatives of 1,2-propylene glycol, preferably at least 75 wt%, more preferably at least 85 wt%, even more preferably at least 95 wt%, and especially at least 98 wt%.

In a less preferred embodiment the coolant according to the present invention may comprise alkylene glycols or derivatives thereof other than 1,2-propylene glycol and its derivatives.

Such alkylene glycols may be monoethylene glycol, diethylene glycol, triethylene glycol, tetraethylene glycol and mixtures thereof, 1,3-propanediol, higher poly alkylene glycols, alkylene glycol ethers, for example monoethylene glycol monomethyl ether, diethylene glycol monomethyl ether, triethylene glycol monomethyl ether, tetraethylene glycol monomethyl ether, monoethylene glycol monoethyl ether, diethylene glycol monoethyl ether, triethylene glycol monoethyl ether, tetraethylene glycol monoethyl ether, monoethylene glycol mono-n-butyl ether, diethylene glycol mono-n-butyl ether, triethylene glycol mono-n-butyl ether and tetraethylene glycol mono-n-butyl ether, or glycerol, in each case either alone or as mixtures thereof.

However, the content of 1,2-propylene glycol and its derivatives in the mixture of all alkylene glycols and derivatives thereof is at least 50 % by weight, preferably at least 66 % by weight, more preferably at least 75 wt%, even more preferably at least 85 wt%, and especially at least 95 wt%.

In a preferred embodiment the coolant according to the present invention does not comprise any alkylene glycols or derivatives thereof other than 1,2-propylene glycol and its derivatives.

### Water (B)

Water used for the coolants according to the present invention should be ion-free, designating water with a neutral pH-value and comprising essentially no further ions than those hydroxide ions and hydronium ions out of the autoprotolysis of water at the respective temperature.

The electrical conductivity (throughout this text determined according to ASTM D 1125) at 25 °C of the ion-free water used should preferably not exceed 5 µS/cm, more preferably not more than 3, even more preferably not more than 2, and especially not more than 1 µS/cm.

The ion-free water used can be pure distilled or twice-distilled water or water which has been deionized, for example by ion exchange.

### Azole Derivatives (C)

Azole derivatives in the context of the present invention mean five-membered heterocyclic compounds having 2 or 3 heteroatoms from the group consisting of nitrogen and sulfur and comprise no or at most one sulfur atom and can bear an aromatic or saturated six-membered fused-on ring.

These five-membered heterocyclic compounds (azole derivatives) usually contain two N atoms and no S atom, 3 N atoms and no S atom or one N atom and one S atom as heteroatoms.

Preferred groups of the specified azole derivatives are annellated imidazoles and annellated 1,2,3-triazoles of the general formula 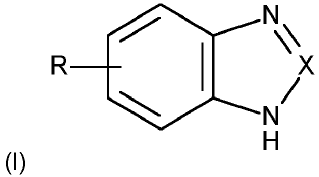 or 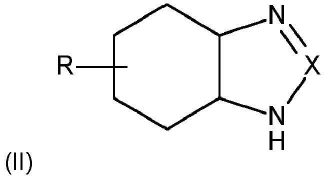 where
the variable R is hydrogen or a C₁-C₁₀-alkyl radical, in particular methyl or ethyl, and
the variable X is a nitrogen atom or the C-H group.

Typical and preferred examples of azole derivatives of the general formula (I) are benzimidazole (X = C-H, R = H), benzotriazoles (X = N, R = H) and tolutriazole (tolyltriazole) (X = N, R = CH₃). A typical example of an azole derivative of the general formula (II) is hydrogenated 1,2,3-tolutriazole (tolyltriazole) (X = N, R = CH₃).

A further preferred group of the specified azole derivatives is benzothiazoles of the general formula (III) 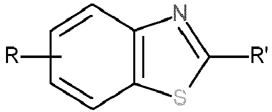 where
the variable R is as defined above and
the variable R' is hydrogen, a C₁-C₁₀-alkyl radical, in particular methyl or ethyl, or in particular a mercapto group (-SH). A typical example of an azole derivative of the general formula (III) is 2-mercaptobenzothiazole.

It is also possible, however less preferable, to use (2-benzothiazylthio)acetic acid (R' = -S-CH₂-COOH) or (2-benzothiazylthio) propionic acid (R' = -S-CH₂-CH₂-COOH). This embodiment is less preferable since the use of such free-acid compounds would increase the electrical conductivity of the coolant.

Further suitable azole derivatives are non-annellated azole derivatives of the general formula (IV) 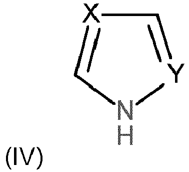 where
the variables X and Y together are two nitrogen atoms or
one nitrogen atom and a C-H group,
for example 1H-1,2,4-triazole (X = Y = N) or preferably imidazole (X = N, Y = C-H).

For the purposes of the present invention, benzimidazole, benzotriazole, tolutriazole, hydrogenated tolutriazole or mixtures thereof, in particular benzotriazole or tolutriazole, are very particularly preferred as azole derivatives.

The azole derivatives mentioned are commercially available or can be prepared by conventional methods. Hydrogenated benzotriazoles such as hydrogenated tolutriazole are likewise obtainable as described in DE-A 1 948 794 and are also commercially available.

Esters of Orthosilicic Acid or Alkoxy Alkylsilanes (D) (optionally)

Esters of orthosilicic acid are compounds of the formula

Si(OR¹)₄

wherein
R¹ is an organic substituent comprising 1 to 6 carbon atoms, for example a linear or branched, preferably a linear alkyl substituent comprising 1 to 6 carbon atoms or an aromatic substituent comprising 6 carbon atoms, more preferably an alkyl substituent comprising 1 to 4 carbon atoms and even more preferably an alkyl substituent comprising 1 or 2 carbon atoms.

Alkoxy alkylsilanes are less preferred and both the alkoxy substituent as well as the alkyl group comprise a linear or branched, preferably a linear alkyl substituent comprising 1 to 6 carbon atoms, more preferably an alkyl substituent comprising 1 to 4 carbon atoms and even more preferably an alkyl substituent comprising 1 or 2 carbon atoms.

Typical examples of compounds (D) are tetraalkoxysilanes, preferably tetra C₁-C₄-alkyloxysilanes, more preferably tetramethoxysilane and tetraethoxysilane, and alkoxy-alkylsilanes, preferably triethoxymethylsilane, diethoxydimethylsilane, ethoxytrimethylsilane, trimethoxymethylsilane, dimethoxydimethylsilane and methoxytrimethylsilane. Preference is given to tetraalkoxysilanes, particularly preferably tetramethoxysilane and tetraethoxysilane, with very particular preference being given to tetraethoxysilane.

Compounds (D) are mainly used as inhibitors of aluminium corrosion.

### Monocarboxylic Acid (F)

Modern coolants often comprise carboxylic acids, such as monocarboxylic acids or dicarboxylic acids or carboxylic acids with a higher functionality, preferably monocarboxylic acids, as corrosion inhibitors for iron-based materials.

Suitable monocarboxylic acids (F) may be linear or branched-chain, aliphatic, cycloaliphatic or aromatic monocarboxylic acids with up to 20 carbon atoms, preferably with from 2 to 18, more preferably with from 5 to 16, even more preferably with from 5 to 14, most preferably with from 6 to 12, and especially with from 8 to 10 carbon atoms.

Branched-chain aliphatic monocarboxylic acids are preferred of the corresponding linear monocarboxylic acids.

Useful linear or branched-chain, aliphatic or cycloaliphatic monocarboxylic acids (F) are, for example, propionic acid, pentanoic acid, 2,2-dimethylpropanoic acid, hexanoic acid, 2,2-dimethylbutaneoic acid, cyclohexyl acetic acid, octanoic acid, 2-ethylhexanoic acid, nonanoic acid, isononanoic acid, decanoic acid, undecanoic acid or dodecanoic acid.

A suitable aromatic monocarboxylic acid (F) is in particular benzoic acid; additionally useful are also, for example, C₁- to C₈-alkylbenzoic acids such as o-, m-, p-methylbenzoic acid or p-tert-butylbenzoic acid, and hydroxyl-containing aromatic monocarboxylic acids such as o-, m- or p-hydroxybenzoic acid, o-, m- or p-(hydroxymethyl)benzoic acid or halobenzoic acids such as o-, m- or p-fluorobenzoic acid.

Especially preferred are 2-ethylhexanoic acid and isononanoic acid.

As used herein, isononanoic acid refers to one or more branched-chain aliphatic carboxylic acids with 9 carbon atoms. Embodiments of isononanoic acid used in the engine coolant composition may include 7-methyloctanoic acid (e.g., CAS Nos. 693-19-6 and 26896-18-4), 6,6-dimethylheptanoic acid (e.g., CAS No. 15898-92-7), 3,5,5-trimethylhexanoic acid (e.g., CAS No. 3302-10-1), 3,4,5-trimethylhexanoic acid, 2,5,5-trimethylhexanoic acid, 2,2,4,4-tetramethylpentanoic acid (e.g., CAS No. 3302-12-3) and combinations thereof. In a preferred embodiment, isononanoic acid has as its main component greater than 90% of one of 7-methyloctanoic acid, 6,6-dimethylheptanoic acid, 3,5,5-trimethylhexanoic acid, 3,4,5-trimethylhexanoic acid, 2,5,5-trimethylhexanoic acid, and 2,2,4,4-tetramethylpentanoic acid. The balance of the isononanoic acid may include other nine carbon carboxylic acid isomers and minor amounts of one or more contaminants. In a preferred embodiment, the isononanoic acid has as its main component greater than 90% of 3,5,5-trimethylhexanoic acid and even more preferably, the main component is greater than 95% 3,5,5-trimethylhexanoic acid.

It is possible, however disadvantageous, to use carboxylic acids with a higher functionality, e.g. di- or tricarboxylic acids, in addition to or instead of the monocarboxylic acids. The use of monocarboxylic acids has been shown to yield superior results compared to commonly used dicarboxylic acids, see examples.

If used, di- or tricarboxylic acids can be aliphatic, cycloaliphatic or aromatic, preferably aliphatic or aromatic and more preferably aliphatic with up to 20 carbon atoms, preferably with up to 18, more preferably with up to 16, even more preferably with up to 14, and especially up to 12 carbon atoms.

If used, examples of dicarboxylic acids are oxalic acid, malonic acid, succinic acid, glutaric acid, adipic acid, pimelic acid, suberic acid, azelaic acid, sebacic acid, undecanedioic acid, dodecanedioic acid, alkyl or alkenyl succinic acids, 2-metylbutane dioic acid, 2-ethylpentanedioic acid, 2-n-dodecylbutanedioic acid, 2-ndodecenylbutanedioic acid, 2-phenylbutanedioic acid, 2-(p-methylphenyl) butanedioic acid, 2,2-dimethylbutanedioic acid, 2,3-dimethylbutanedioic acid; 2,3,4 trimethylpentanedioic acid, 2,2,3-trimethylpentanedioic acid; 2-ethyl-3-methylbutanedioic maleic acid, fumaric acid, pent-2-enedioic acid, hex-2-enedioic acid; hex-3-endioic acid; 5-methylhex-2-enedioic acid; 2,3-dimethylpent-2-enedioic acid; 2-methylbut-2-enedioic acid, 2-dodecylbut-2-enedioic acid, phthalic acid, isophthalic acid, terephthalic acid and substituted phthalic acids such as 3-methylbenzene-1,2-dicarboxylic acid; 4-phenylbenzene-1,3-dicarboxylic acid; 2-(1-propenyl) benzene-1,4-dicarboxylic acid, and 3,4-dimethylbenzene-1,2-dicarboxylic acid.

If used, examples of tricarboxylic acids are benzene tricarboxylic acids (all isomers) and triazinetriiminocarboxylic acids such as 6,6',6"-(1,3,5-triazine-2,4,6-triyltriimino)trihexanoic acid.

In a preferred embodiment the coolants according to the invention do not contain any carboxylic acids with a functionality higher than 1.

However, carboxylic acids have the disadvantage that they increase the electrical conductivity. And if a component (D) is present such carboxylic acids may deteriorate the ester of orthosilicic acid.

Hence, preferably no carboxylic acids, especially no monocarboxylic acids (F) are present in the coolant, especially if a component (D) is present.

In the embodiment according to which only component (G) but no component (D) is present the coolant may comprise at least one monocarboxylic acid (F) as long as the required electrical conductivity is not exceeded.

In a preferred embodiment the coolant according to the present invention does not comprise any carboxylic acids unless those mentioned as component (D).

### Silicophosphonate (G)

Furthermore, the coolant may optionally comprise at least one silicophosphonate (G).

Silicophosphonates are those of the general structure (V) 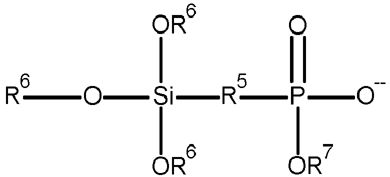 where
R⁵ is a bivalent organic residue, preferably a 1,ω-alkylene group with 1 to 6, preferably 1 to 4 carbon atoms, more preferably methylene, 1,2-ethylene, 1,2-propylene, 1,3-propylene or 1,4-butylene, most preferably 1,2-ethylene or 1,3-propylene, and especially 1,2-ethylene,
R⁶ and R⁷ are independently of another C₁- to C₄-alkyl, preferably methyl, ethyl, n-propyl, iso-propyl, n-butyl, iso-butyl, sec-butyl or tert-butyl, preferably methyl or ethyl.

Such silicophosphonates may exist as free phosphonate acid or in the form of their sodium or potassium salts, preferably sodium or potassium salt, more preferably as sodium salt.

### Further Coolant Additives (H)

It is possible to add further typical coolant additives to the coolants of the present invention, as long as they do not increase the electrical conductivity above the critical value pointed out above.

As further customary assistants, the inventive coolant may also comprise, in customary small amounts, defoamers (generally in amounts of from 0.003 to 0.008% by weight) and, for reasons of hygiene and safety in the event that it is swallowed, bitter substances (for example of the denatonium benzoate type) and dyes.

Wherever possible the use of non-ionic additives is preferred over ionic alternatives as long as a similar effect can be achieved using the non-ionic additives.

In a preferred embodiment the coolant according to the present invention does not comprise any further coolant additives (H).

### Composition

Main requirement of the coolants according to the present invention is that the coolants should exhibit an electrical conductivity at 25 °C of less than 50, preferably less than 45 µS/cm (determined according to ASTM D 1125) to make the suitable for cooling systems of vehicles with electric engines.

In order to achieve that purpose the amount of ionic species, species which may contain ionic byproducts or combination of species which may form ions, such as acids and bases, should be kept at a minimum in order not to raise the electrical conductivity over the critical value.

Therefore, the amount of components (C) to (H) in the coolant are chosen in a way that the critical value for the electrical conductivity is not exceeded.

Typically, the coolants according to the invention are composed as follows:
(A) 1,2-propylene glycol or derivatives thereof: 10 to 90 wt%, preferably 20 to 80 wt%, more preferably 30 to 70 wt%
(B) water: 10 to 90 wt%, preferably 20 to 80 wt%, more preferably 30 to 70 wt%
(C) at least one azole derivative: 0.01 to 1 wt%, preferably 0.02 to 0.9 wt%, more preferably 0.03 to 0.8 wt%, even more preferably 0.04 to 0.5, especially 0.05 to 0.3 wt%
(D) optionally at least one ester of orthosilicic acid or alkoxy alkylsilane: if present 0.01 to 1 wt%, preferably 0.02 to 0.9 wt%, more preferably 0.03 to 0.8 wt%, even more preferably 0.04 to 0.5, especially 0.05 to 0.3 wt%
(G) optionally at least one silicophosphonate: 0 to 1 wt%, preferably 0.01 to 0.8 wt%, more preferably 0.02 to 0.6 wt%
(H) optionally at least on further coolant additive: 0 to 0.5 wt% for each further coolant additive, preferably 0.01 to 0.4 wt%, more preferably 0.02 to 0.3 wt%,
with the proviso that the sum of all components always add up to 100 wt%,
wherein at least one of the components (D) and (G) is present.

A further embodiment of the present invention are coolant concentrates. Coolants usually are obtained from coolant concentrates by dilution with water (B). Hence, the coolant concentrates usually contain little or no water (B).

Typically, the coolant concentrates according to the invention are composed as follows:
(A) 1,2-propylene glycol or derivatives thereof: 50 to 99,9 wt%, preferably 60 to 99,8 wt%, more preferably 75 to 99,7 wt%
(B) water: 0 to 10 wt%, preferably 0 to 8 wt%, more preferably 0 to 5 wt%
(C) at least one azole derivative: 0.02 to 1 wt%, preferably 0.04 to 0.8 wt%, more preferably 0.06 to 0.6 wt%, even more preferably 0.08 to 0.5, especially 0.1 to 0.4 wt%
(D) optionally at least one ester of orthosilicic acid or alkoxy alkylsilane: if present 0.02 to 1 wt%, preferably 0.04 to 0.8 wt%, more preferably 0.06 to 0.6 wt%, even more preferably 0.08 to 0.5, especially 0.1 to 0.4 wt%
(G) optionally at least one silicophosphonate: 0 to 1 wt%, preferably 0.02 to 0.8 wt%, more preferably 0.04 to 0.6 wt%
(H) optionally at least on further coolant additive: 0 to 0.5 wt% for each further coolant additive, preferably 0.002 to 0.4 wt%, more preferably 0.004 to 0.3 wt%,
with the proviso that the sum of all components always add up to 100 wt%,
wherein at least one of the components (D) and (G) is present.

A further embodiment of the present invention are coolant super concentrates. Coolant concentrates usually are obtained from coolant super concentrates by dilution with the glycol (A), respectively coolants may be obtained from coolant super concentrates by dilution with the glycol (A) and water (B). Hence, the coolant concentrates usually contain little or no water (B) and little or no glycol (A).

Typically, the coolant super concentrates according to the invention are composed as follows:
(A) 1,2-propylene glycol or derivatives thereof: 70 to 99,5 wt%, preferably 80 to 99 wt%, more preferably 90 to 98 wt%
(B) water: 0 to 10 wt%, preferably 0 to 8 wt%, more preferably 0 to 5 wt%
(C) at least one azole derivative: 0.05 to 5 wt%, preferably 0.1 to 4 wt%, more preferably 0.2 to 3 wt%, even more preferably 0.3 to 2, especially 0.4 to 1.5 wt%
(D) optionally at least one ester of orthosilicic acid or alkoxy alkylsilane: if present 0.05 to 5 wt%, preferably 0.1 to 4 wt%, more preferably 0.2 to 3 wt%, even more preferably 0.3 to 2, especially 0.4 to 1.5 wt%
(G) optionally at least one silicophosphonate: 0 to 5 wt%, preferably 0.02 to 4 wt%, more preferably 0.04 to 3 wt%
(H) optionally at least on further coolant additive: 0 to 1 wt% for each further coolant additive, preferably 0.005 to 0.8 wt%, more preferably 0.008 to 0.6 wt%,
with the proviso that the sum of all components always add up to 100 wt%,
wherein at least one of the components (D) and (G) is present.

Because of their low electrical conductivity the coolants according to the present invention may be used in cooling systems of vehicles with electric engines, fuel cells or hybrid engines with a combination of combustion engines with electric engines or a combination of combustion engines with fuel cells.

### Examples

The invention is illustrated in the following examples, but without it being restricted thereto.

Coolant compositions were prepared by mixing the constituents as listed in Table 1 (all amounts given in weight%) and electrical conductivity according to ASTM D 1125 at 25 °C [µS/cm] was determined.

**Table 1**

| Raw material | Ex 1 | Ex 2 (Comp) |
|---|---|---|
| 1,2-Propylene glycol | 50.0 | -- |
| Monoethylene glycol | -- | 50.0 |
| Pure water (distilled) | 49.8 | 49.8 |
| Benzotriazole | 0.1 | 0.1 |
| Tetraethoxysilane | 0.1 | 0.1 |
| Total | 100 | 100 |

The coolants according to Table 1 were tested as follows and the electrical conductivity according to ASTM D 1125 at 25 °C [µS/cm] determined.

The coolants were stored for a period of 21 days at a temperature of 25 °C in commercially available heat exchangers, predominantly made of aluminium by using a soldering method comprising a fluoroaluminate soldering flux.

Electrical conductivity of the coolants was determined before the test, and samples of the stored coolants at the start and at the end of the test were analysed.

Immediately after filling the electrical conductivity of the coolants increased due to residual traces of fluoroaluminate solder in the system.

**Test 1**

| Electrical Conductivity [µS/cm] | Ex 1 | Ex 2 (Comp) |
|---|---|---|
| Before Test | 0.7 | 0.9 |
| After Fill before Test | 36.0 | 67.4 |
| After Test | 69.3 | 215 |

**Test 2 (repetition)**

| Electrical Conductivity [µS/cm] | Ex 1 | Ex 2 (Comp) |
|---|---|---|
| Before Test | 0.9 | 3.3 |
| After Fill before Test | 9.9 | 17.0 |
| After Test | 63.6 | 192.8 |

It can easily be seen that the coolant according to the present invention based on 1,2-propylene glycol does not only exhibit a lower electrical conductivity than an analogous coolant based on monoethylene glycol, but retains this advantageous property throughout the test.

### Examples 3 to 5

The formulations according to Table 2a were submitted to a corrosion test of an aluminium specimen according to ASTM D4340 for 168 hours. pH-value was determined before and after the test and the and electrical conductivity (ASTM D 1125) was measured. The results are given in Table 2b.

**Table 2a**

| Raw material | Ex 3 | Ex 4 | Ex 5 |
|---|---|---|---|
| 1,2-Propylene glycol | 50.0 | 50.0 | 50.0 |
| Pure water (distilled) | 49.8 | 49.8 | 49.7 |
| Benzotriazole | 0.1 | 0.1 | 0.1 |
| Tetraethoxysilane | 0.1 | -- | 0.1 |
| Silicophosphonate* | -- | 0.1 | 0.1 |
| Total | 100 | 100 | 100 |

| | | | |
|---|---|---|---|
| * Silicophosphonate (Formula (V), R5 = 1,3-propylene, R⁶, R⁷ = methyl and ethyl (statistical mixture), sodium salt) | | | |

**Table 2b**

| | Ex 3 | Ex 4 | Ex 5 |
|---|---|---|---|
| Corrosion [mg/cm²] | -0.01 | -0.01 | -0.01 |
| Electrical conductivity before test [µS/cm] | 0.6 | 37.3 | 36.9 |
| pH-value before test | 5.35 | 7.74 | 7.75 |
| pH-value after test | 6.49 | 7.24 | 7.53 |

It can easily be seen that the change in pH is lowest for the composition according to Example 5 comprising both a silicophosphonate as well as tetraethoxysilane indicating a higher stability of the composition under corrosion conditions.

The composition according to Example 3 with no silicophosphonate present exhibits the lowest electrical conductivity due to the absence of ionic compounds.

The corrosion of aluminium is well inhibited by all compositions. For comparison: A formulation of 50 wt% ethylene glycol and 50 wt% water (see e.g. WO 00/17951) yields a corrosion of cast aluminium in a corrosion test according to ASTM D1384 (88 °C, 336 h) of -0.3 mg/cm² and a change in the pH-value from 5.9 (before test) to 4.0 (after test) showing the excellent corrosion inhibition of the coolants according to the present invention and their stability under test conditions. Furthermore, the electrical conductivity of the ethylene glycol / water composition increases from 0.5 to 728 µS/cm during this test which is not acceptable for a use in cooling systems of vehicles with electric engines, fuel cells or hybrid engines.

## Claims

1. Coolant, comprising
(A) at least one 1,2-propylene glycol or derivatives thereof
(B) water
(C) at least one azole derivative
(D) optionally at least one ester of orthosilicic acid or alkoxy alkylsilane
(G) optionally at least one silicophosphonate
(H) optionally at least one further coolant additive
wherein at least one of the components (D) and (G) is present, and
wherein the electrical conductivity is at most 50 µS/cm, preferably at most 40 µS/cm, more preferably at most 30 and most preferably at most 20 µS/cm.

2. Coolant according to Claim 1, wherein component (A) is selected from the group consisting of 1,2-propylene glycol, poly- and oligomers of 1,2-propylene glycol, and mono- and dialkyl ethers of 1,2-propylene glycol, poly- and oligomers of 1,2-propylene glycol.

3. Coolant according to any of the preceding claims, wherein the content of 1,2-propylene glycol in component (A) is at least 50 % by weight among other derivatives of 1,2-propylene glycol.

4. Coolant according to any of the preceding claims, wherein the coolant may comprise alkylene glycols and derivatives thereof other than 1,2-propylene glycol and its derivatives, wherein the content of 1,2-propylene glycol and its derivatives in the mixture of all alkylene glycols and derivatives thereof is at least 50 % by weight.

5. Coolant according to any of the preceding claims, wherein the azole derivative (C) is selected from the group consisting of benzimidazole, benzotriazole, tolutriazole, hydrogenated tolutriazole, (2-benzothiazylthio)acetic acid, and (2-benzothiazylthio) propionic acid.

6. Coolant according to any of the preceding claims, wherein the ester of orthosilicic acid (D) is orthosilicic acid tetra ethyl ester or orthosilicic acid tetra methyl ester.

7. Coolant according to any of the preceding claims, wherein component (G) is of formula (V) 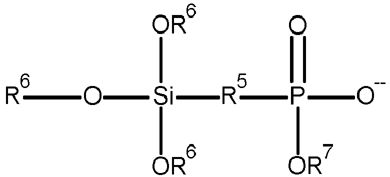 where
R⁵ is a bivalent organic residue, preferably a 1,ω-alkylene group with 1 to 6, preferably 1 to 4 carbon atoms, more preferably methylene, 1,2-ethylene, 1,2-propylene, 1,3-propylene or 1,4-butylene, most preferably 1,2-ethylene or 1,3-propylene, and especially 1,2-ethylene,
R⁶ and R⁷ are independently of another C₁- to C₄-alkyl, preferably methyl, ethyl, n-propyl, iso-propyl, n-butyl, iso-butyl, sec-butyl or tert-butyl, preferably methyl or ethyl.

8. Coolant according to any of the preceding claims, comprising at least one compound (D) and at least one compound (G).

9. Coolant according to any of the claims 1 to 5 and 7, comprising at least one compound (G) and no compound (D).

10. Coolant according to any of the claims 1 to 6, comprising at least one compound (D) and no compound (G), wherein the coolant comprises not more than 50 vol% of 1,2-propylene glycol or derivatives thereof and at least 50 vol% water.

11. Coolant according to any of the claims 1 to 6, comprising at least one compound (D) and no compound (G), wherein the coolant comprises only 1,2-propylene glycol or derivatives thereof without other alkylene glycols or derivatives thereof than 1,2-propylene glycol.

12. Coolant according to any of the preceding claims, **characterised in that** it does not contain any carboxylic acids.

13. Coolants according to any of the Claims 1 to 8 composed as follows:
(A) 1,2-propylene glycol or derivatives thereof: 10 to 90 wt%, preferably 20 to 80 wt%, more preferably 30 to 70 wt%
(B) water: 10 to 90 wt%, preferably 20 to 80 wt%, more preferably 30 to 70 wt%
(C) at least one azole derivative: 0.01 to 1 wt%, preferably 0.02 to 0.9 wt%, more preferably 0.03 to 0.8 wt%, even more preferably 0.04 to 0.5, especially 0.05 to 0.3 wt%
(D) optionally at least one ester of orthosilicic acid or alkoxy alkylsilane: if present 0.01 to 1 wt%, preferably 0.02 to 0.9 wt%, more preferably 0.03 to 0.8 wt%, even more preferably 0.04 to 0.5, especially 0.05 to 0.3 wt%
(G) optionally at least one silicophosphonate: 0 to 1 wt%, preferably 0.01 to 0.8 wt%, more preferably 0.02 to 0.6 wt%
(H) optionally at least on further coolant additive: 0 to 0.5 wt% for each further coolant additive, preferably 0.01 to 0.4 wt%, more preferably 0.02 to 0.3 wt%,
with the proviso that the sum of all components always add up to 100 wt%,
wherein at least one of the components (D) and (G) is present.

14. Coolant concentrates composed as follows:
(A) 1,2-propylene glycol or derivatives thereof: 50 to 99,9 wt%, preferably 60 to 99,8 wt%, more preferably 75 to 99,7 wt%
(B) water: 0 to 10 wt%, preferably 0 to 8 wt%, more preferably 0 to 5 wt%
(C) at least one azole derivative: 0.02 to 1 wt%, preferably 0.04 to 0.8 wt%, more preferably 0.06 to 0.6 wt%, even more preferably 0.08 to 0.5, especially 0.1 to 0.4 wt%
(D) optionally at least one ester of orthosilicic acid or alkoxy alkylsilane: if present 0.02 to 1 wt%, preferably 0.04 to 0.8 wt%, more preferably 0.06 to 0.6 wt%, even more preferably 0.08 to 0.5, especially 0.1 to 0.4 wt%
(G) optionally at least one silicophosphonate: 0 to 1 wt%, preferably 0.02 to 0.8 wt%, more preferably 0.04 to 0.6 wt%
(H) optionally at least on further coolant additive: 0 to 0.5 wt% for each further coolant additive, preferably 0.002 to 0.4 wt%, more preferably 0.004 to 0.3 wt%,
with the proviso that the sum of all components always add up to 100 wt%,
wherein at least one of the components (D) and (G) is present.

15. Use of a coolant according to any of the Claims 1 to 14 as coolants in cooling systems of vehicles with electric engines, fuel cells or hybrid engines with a combination of combustion engines with electric engines or a combination of combustion engines with fuel cells.
